# EUROPEAN PATENT APPLICATION

(11) **EP 3 835 240 A1**
(43) Date of publication of application: **16.06.2021**
(21) Application number: 19215585.1
(22) Date of filing: 12.12.2019
(51) Int. Cl.: B65G 47/252, B65B 35/56

(54) **SYSTEM AND METHOD FOR AUTOMATED TILTING OF CUBOID OBJECTS**

(71) Applicant: Hicof Inc., 8832 Wollerau (CH)
(72) Inventor: Toedtli, Sascha, 8806 Bäch (CH); Toedtli, Dimitri Sergej, 8806 Bäch (CH)
(74) Representative: Altmann Stößel Dick Patentanwälte PartG mbB

(57) **Abstract**

A system (110) for automated tilting of at least one cuboid object (112) around a tilting axis (120) is disclosed. The system (110) comprises:
a. at least two revolving transport cylinders (130) arranged on opposite sides of a conveying path (140) for movement of the cuboid object (112) in a transportation direction (142) over at least one portion of the conveying path (140), the transport cylinders (130) being configured for engaging with the cuboid object (112) from opposing sides; and
b. at least one tilting edge (146) oriented transverse to transportation direction (142), the tilting edge (146) being located in the portion of the conveying path (140).

The revolving transport cylinders are configured for forcing the cuboid object (112) over the tilting edge (146), thereby exerting a torque on the cuboid object (112) and tilting the cuboid object (112) around the tilting axis (120). The tilting axis (120) is parallel to the tilting edge (146). Further, a packaging line (114), a method for automated tilting of at least one cuboid object (112) around a tilting axis (120) and a use of the system (110) are proposed.

## Description

### Technical Field

The invention relates to a system for automated tilting of at least one cuboid object, as well as to a packaging line comprising the system. The invention further relates to a method for automated tilting of at least one cuboid object as well as to a use of the system. The system, the packaging line and the method specifically may be applied in mass production of various products comprising packaging goods. Other applications also are feasible.

### Background art

Most mass-produced products are packed automatically in cuboid packs, mostly carton folding boxes. For automatic packaging, often, packaging lines are used. Such packaging lines often comprise, such as in a sequence, highly specialized packaging machines, linked together through transportation devices, such as box transportation systems like e.g. conveyors or pushers.

However, in some instances, the orientation or position of the packages, such as the boxes, must be changed between the different packaging processes. A re-orientation of the packages may imply a tilting, also referred to as a flipping. This tilting task is specifically complex in case a tilting has to take place around a horizontal axis perpendicular to the transportation direction. Similar situations can occur in manufacturing processes in case cuboid objects are to be tilted around their horizontal rotation axis perpendicular to the transportation direction.

Thus, there is a need for simple and efficient means and methods for re-orienting cuboid objects, such as packages or other cuboid objects, in a simple and automated fashion.

### Problem to be solved

It is therefore desirable to provide devices and methods for automated tilting of cuboid objects, specifically in serial manufacturing or packaging environments, in a fast and efficient fashion.

### Summary

This problem is addressed by a system and a method for automated tilting of at least one cuboid object, by a packaging line and by a use of the system, with the features of the independent claims. Advantageous embodiments which might be realized in an isolated fashion or in any arbitrary combinations are listed in the dependent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a system for automated tilting of at least one cuboid object around a tilting axis is disclosed. The system comprises:
a. at least two transport cylinders arranged on opposite sides of a conveying path for movement of the cuboid object in a transportation direction over at least one portion of the conveying path, the transport cylinders being configured for engaging with the cuboid object from opposing sides; and
b. at least one tilting edge oriented transverse to transportation direction, the tilting edge being located in the portion of the conveying path.
Therein, the transport cylinders are configured for forcing the cuboid object over the tilting edge, thereby exerting a torque on the cuboid object and tilting the cuboid object around the tilting axis, the tilting axis being parallel to the tilting edge.

The term "system" as used herein is a broad term and is to be given its ordinary and customary meaning to a person of ordinary skill in the art and is not to be limited to a special or customized meaning. The term specifically may refer, without limitation, to an assembly of at least two components having partial functionality and being configured for cooperating or interacting, in order to fulfill a common purpose of the system.

The term "tilting" as used herein is a broad term and is to be given its ordinary and customary meaning to a person of ordinary skill in the art and is not to be limited to a special or customized meaning. The term specifically may refer, without limitation, to the process of re-orienting an object by one or more of turning, pivoting, revolving or flipping the object around at least one axis. Specifically, the term may refer to a tilt around an axis, such as a horizontal axis, by a tilting angle of 90°, wherein tolerances of e.g. no more than 20°, specifically of no more than 10°, are also feasible. The at least one axis, around which the tilting process takes place, is also referred to as the tilting axis.

The term "automated" as used herein is a broad term and is to be given its ordinary and customary meaning to a person of ordinary skill in the art and is not to be limited to a special or customized meaning. The term specifically may refer, without limitation, to the fact that an action or process is performed fully or partially without human intervention, by one or more machines or a system. The automated process specifically may refer to a computer-controlled process.

As outlined above, the system comprises at least two transport elements designed as transport cylinders arranged on opposite sides of the conveying path. The at least two transport cylinders function as revolving transport elements. Additionally, the system may comprise one or more additional transport elements. The term "transport element" as used herein is a broad term and is to be given its ordinary and customary meaning to a person of ordinary skill in the art and is not to be limited to a special or customized meaning. The term specifically may refer, without limitation, to an arbitrary device or element configured for transporting another device or element. The at least two transport elements may be revolving transport elements. Thus, the transport elements may continuously or intermittently turn or rotate around at least one axis of rotation of the transport elements. Specifically, as will be outlined in further detail below, the transport elements may be or may comprise cylindrical transport elements or cylinders. Additionally, other types of transport elements may be present.

Specifically, the at least two transport cylinders may be oriented in an essentially parallel fashion, such as with a deviation from a parallel orientation of no more than 20°, e.g. of no more than 10° or of no more than 5°. Specifically, the transport cylinders may be rotating on opposite sides of the conveying path. The at least two transport cylinders specifically may be oriented essentially vertically to at least one of the conveying path, the transportation direction and the tilting edge. Again, deviations from a vertical orientation by no more than 20°, such as by no more than 10° and more specifically by no more than 5° are also possible.

The term "conveying path" as used herein is a broad term and is to be given its ordinary and customary meaning to a person of ordinary skill in the art and is not to be limited to a special or customized meaning. The term specifically may refer, without limitation, to the path along which an object moves, either by itself or by being forced to perform the movement. The conveying path specifically may be a straight path, at least partially, such as in the range of the transport cylinders and the tilting edge.

Consequently, the term "transportation direction" as used herein also is a broad term and is to be given its ordinary and customary meaning to a person of ordinary skill in the art and is not to be limited to a special or customized meaning. The term specifically may refer, without limitation, to the direction of movement of the object, such as a local direction or a general direction, specifically a direction of movement when the cuboid object passes the revolving elements and/or the tilting edge. The transportation direction specifically may be a horizontal transportation direction, wherein, however, deviations from a horizontal orientation may also be possible, such as deviations by no more than 20°, such as by no more than 10° or by no more than 5°.

As outlined above, the transport cylinders are configured for engaging with the cuboid object from opposing sides. The engagement, specifically, may take place by frictional engagement. For this purpose, the surface of the transporting element specifically may be a rough surface and/or a sticky surface, such as a rubber surface. The engagement, specifically, may take place along engagement lines, such as vertical engagement lines.

As further outlined above, the transport cylinders are arranged for movement of the cuboid object in the transportation direction over at least one portion of the conveying path. This portion of the conveying path may be defined by the portion of the conveying path along which the cuboid object moves as long as the cuboid object is engaged by the transport elements.

The term "tilting edge" as used herein is a broad term and is to be given its ordinary and customary meaning to a person of ordinary skill in the art and is not to be limited to a special or customized meaning. The term specifically may refer, without limitation, to an edge of an object, specifically a straight edge, around which a rotation of another object may take place. Thus, specifically, the tilting edge may be an edge of a step in a supporting element, such as a transporting plane on which the cuboid object may rest, such that the transporting plane, before and after the tilting edge, has a different height.

The tilting edge is oriented transverse to the transportation direction. The term "transverse", as used herein and as the skilled person will understand, generally may refer to a nonparallel orientation between the transportation direction and the tilting edge. Specifically, the tilting edge may be oriented perpendicular to the transportation direction. Thus, the tilting edge may extend in a straight fashion perpendicular or essentially perpendicular, such as with a deviation of no more than 20°, more specifically of no more than 10° or even of no more than 5° from a perpendicular orientation, to the transportation direction. Further, the tilting edge may extend in a horizontal plane or in an essentially horizontal plane, such as with a deviation from a horizontal orientation by no more than 20°, more specifically by no more than 10° or even no more than 5°. The tilting edge specifically may be oriented essentially perpendicular to at least one of the conveying path, the transportation direction and an axis of rotation of the revolving transport elements, wherein, again, the term "essentially perpendicular" may include deviations from a perpendicular orientation, such as by no more than 20%, more preferably by no more than 10% or by no more than 5%.

The tilting edge is located in the portion of the conveying path, along which the cuboid object is moved by the transport elements. Thus, when the cuboid object gets in touch with the tilting edge, the cuboid object still may be engaged by the transport cylinders. Thus, specifically, the transport cylinders may be spaced apart by a distance D. The tilting edge, as an example, may be spaced apart from an interconnecting line interconnecting the transport cylinders by no more than a distance D, such as by no more than D/2.

The transport cylinders, as outlined above, are configured for forcing the cuboid object over the tilting edge, thereby exerting a torque on the cuboid object and tilting the cuboid object around the tilting axis, the tilting axis being parallel to the tilting edge. Thus, the transport cylinders specifically may be configured for exerting at least one force onto the cuboid object in a direction not intersecting with the tilting axis, such that the torque is exerted onto the cuboid object, thereby rotating the cuboid object around the tilting axis. The tilting axis is generally parallel to the tilting edge or, more specifically, may also be located within the tilting edge or may coincide with the tilting edge.

The conveying path, as indicated above, specifically may be defined by a transport roadway on which the cuboid object is movable. The transport roadway, as an example and as also outlined above, specifically may comprise a supporting element, such as a transporting plane, e.g. a flat plane and/or a plane having a plurality of rollers. As further outlined above, the tilting edge specifically may be defined by a step transverse to the transportation direction, such as a step in an essentially horizontal direction being oriented essentially perpendicular to the transportation direction, with the definition of "essentially" as given above. The step specifically may be located in between the two transport cylinders, such as with a separation from an interconnecting line between the transport cylinders of no more than D, as outlined above.

As further outlined above, the transportation direction specifically may be oriented essentially horizontally, with possible deviations from a horizontal orientation as given above. Further, as also discussed earlier, the system may comprise at least one transportation plane, specifically at least one horizontal transportation plane, wherein the transportation plane specifically may be oriented parallel or at least essentially parallel, with the possible deviations from a parallel orientation as indicated above, to the transportation path. Thus, as an example, tolerances of no more than 20°, such as of no more than 10° or even of no more than 5°, are possible.

The at least two transport cylinders, specifically may be driven by at least one drive, such as at least one motor. Specifically, the transport cylinders may be powered revolving cylinders.

More specifically, the transport cylinders may be arranged on opposing or opposite sides of the conveying path and may rotate in opposite directions. The transport cylinders specifically may be arranged symmetrically with respect to the conveying path. The transport cylinders may be synchronized in their movements, such as by using a common drive for the transport cylinders. In case two transport cylinders are provided on opposing sides of the conveying path, the transport cylinders specifically may rotate at the same rotational speed, e.g. in opposite directions. The opposite directions specifically may be oriented such that the cuboid object passing in between the transport cylinders and being engaged on both sides by the revolving transport cylinders is pushed into the transportation direction.

The system may further comprise at least one conveyor for transporting the cuboid object to the transport cylinders. The term "conveyor" as used herein is a broad term and is to be given its ordinary and customary meaning to a person of ordinary skill in the art and is not to be limited to a special or customized meaning. The term specifically may refer, without limitation, to a device or a combination of devices configured for transporting other devices. More specifically, the at least one conveyor may comprise at least one of a conveyor belt and a roller conveyor. Additionally or alternatively, the system may further comprise at least one pusher for pushing the cuboid object to the revolving transport elements. The pusher, as an example, may have a pushing direction oriented horizontally. The pusher may be configured for pushing a single cuboid object or a plurality of cuboid objects in series.

As outlined above, the transport cylinders specifically may be configured for revolving in opposite directions. Specifically, the transport cylinders may revolve in an inwardly facing direction, such that, for each of the transport cylinders and at each time, at least one surface element of each transport cylinder facing the conveying path moves in the transportation direction. In other words, specifically, on a side facing inwardly, the transport cylinders may be configured for moving in the transportation direction. Thus, the cuboid object engaged on both sides by the transport cylinders may be moved forward into the transportation direction by both transport cylinders.

As further outlined above, the transport cylinders specifically may have flexible surfaces. Thus, when engaging with the cuboid object, the flexible surfaces of the transport cylinders may be deformed by the cuboid object, thereby increasing the engagement. Additionally, or alternatively, having a similar effect, the transport cylinders at least partially may be made of at least one flexible material. Specifically, the transport cylinders at least partially may be made of a rubber material. As an example, the transport cylinders may have a flexible coating and/or may have at least one outer layer made of the flexible material and/or of the rubber material.

The system specifically may be configured for adjusting a rotation speed of the revolving transport elements. As outlined above, the rotation speed of the transport cylinders may be synchronized, such as by controlling the rotation speed of the transport cylinders to be essentially identical, even though the rotations may be directed in opposite directions. Specifically, the system may comprise at least one system controller configured for adjusting the rotation speed. The system controller, as an example, may comprise at least one processor. Manual systems, however, are also feasible.

The at least two transport cylinders specifically may be arranged on opposite sides of the conveying path. Therein, the at least two transport cylinders may be spaced apart by an adjustable distance. The distance, as an example, may be adjusted by a stage and/or by adjustable fixations of the revolving transport elements. By adjusting the distance, the system may be adapted to varying sizes of the cuboid objects.

Similarly, the at least one tilting edge may have an adjustable height. Again, this adjustment may be made in order to adapt the system to varying sizes of the cuboid objects. The adjustment, again, may be made e.g. by one or more adjustment elements, such as one or more stages, adjustment screws, actuators or the like. Further, the position of the tilting edge in the transportation direction may also be adjustable. Similar actuators and purposes as for the adjustment of the height of the tilting edge may be given.

The above-mentioned system for automated tilting of at least one cuboid object may be used, as an example, in manual working stations. Additionally or alternatively, however, the system may also be implemented into fully or partially automated lines, such as lines for manufacturing, packaging, logistics or the like. Thus, in a further aspect of the present invention, a packaging line for packaging goods is disclosed. The term "packaging line" as used herein is a broad term and is to be given its ordinary and customary meaning to a person of ordinary skill in the art and is not to be limited to a special or customized meaning. The term specifically may refer, without limitation, to a combination of devices which sequentially are passed by goods to be packaged, in order to provide for packaging of the goods. The packaging line, as an example, may comprise one or more conveyors for transporting the goods and/or the packaged goods. The packaging line may be a stand-alone packaging line or, alternatively, may also be implemented into a manufacturing line.

The packaging line comprises at least one device for inserting the goods into at least one package, including the option that the goods are surrounded by the package and the option that the package is provided first and the goods are inserted therein. Intermediate forms are also possible. The device for inserting the goods into the at least one package is configured such that the package forms at least one cuboid object. The packaging line further comprises the system of the present invention, such as according to any one of the embodiments disclosed above and/or according to any one of the embodiments described in further detail below, for automated tilting of at least one cuboid object around a tilting axis.

In a further aspect of the present invention, a method for automated tilting of at least one cuboid object around a tilting axis disclosed. The method comprises the following steps which, specifically, may be performed in the given order. It shall be noted, however, that a different order is also possible. It is further possible to perform two or more of the method steps at least partially simultaneously and/or in a timely overlapping fashion. Further, it is possible to perform one or more of the method steps repeatedly. The method may comprise one or more additional method steps which are not listed herein.

The method comprises the following steps:
i. moving the cuboid object in a transportation direction over at least one portion of a conveying path by using at least two transport cylinders arranged on opposite sides of the conveying path, the transport cylinders engaging with the cuboid object from opposing sides; and
ii. forcing the cuboid object over at least one tilting edge, the tilting edge being located in the portion of the conveying path, thereby exerting a torque on the cuboid object and tilting the cuboid object around the tilting axis, the tilting axis being parallel to the tilting edge.

The method specifically may make use of the system for automated tilting according to the present invention, such as according to any one of the embodiments disclosed above and/or according to any one of the embodiments disclosed in further detail below. Thus, for possible definitions and options, reference may be made to the description of the system.

The cuboid object specifically, before performing step ii., may be supported by a transportation plane. The cuboid object may have a first orientation. The cuboid object in the first orientation may have a maximum height H above the transportation plane. The tilting edge specifically may be located above the transportation plane at a height h smaller than the height H, specifically at a height h < 1/3H, more specifically at a height 1/3 H > h > 5/100 H, and more specifically at a height h=1/10 H. These heights may specifically be suited for an efficient tilting and/or for exerting an efficient torque onto the cuboid object.

As outlined above, the method specifically may be useful in line systems and/or in mass production. Thus, specifically, a plurality of the cuboid objects may be tilted sequentially. As further outlined above, the at least one cuboid object specifically may comprise at least one package for packaging goods.

In a further aspect of the present invention, a use of the system according to the present invention is proposed, such as of the system according to any one of the embodiments disclosed above and/or according to any one of the embodiments disclosed in further detail below. The use comprises the purpose of use of an automated tilting of packaged goods.

The system, the packaging line, the method and the use according to the present invention provide a large number of advantages over known systems and methods of similar kind. Specifically, a simple and efficient tilting of cuboid objects may be provided. Thus, as an example, one or more cuboid objects may be transported on a conveyor or may be pushed over one or more slides by means of pushers for feeding the cuboid objects into the tilting mechanism. The tilting mechanism, as outlined above, comprises the at least two transport cylinders and the tilting edge.

The cuboid objects, specifically boxes, may touch each other in line to form a stack being fed into the tilting mechanism. Therein, a distance between the cuboid objects is not required.

The tilting process may imply the revolving transport cylinders, such as the vertically rotating cylinders, moving the cuboid object, in a first orientation, forward until the cuboid object touches the tilting edge. The tilting edge, which may also be referred to as a stopping edge, may be oriented perpendicular to the transportation direction, which may also be referred to as the moving direction. The tilting edge may temporarily stop the cuboid object from moving further into the transportation direction. Instead, the cuboid object may start revolving. During the revolving process, the cuboid object may be pushed upwards by the tilting edge, allowing the cuboid object to step over the tilting edge. As soon as the cuboid object has finished rotation, such as after a 90° rotation, the cuboid object may be placed on an output platform on the upper level of the tilting edge, in a second orientation. The output level may be higher than and the infeed level of the system, such as according to the height of the tilting edge. As soon as the cuboid object has reached this position and/or the second orientation, the tilting edge may have no stopping effect any longer, and the tilting process is performed. In the second orientation, the cuboid object may be moved forward by a further conveyor and/or by subsequence cuboid objects and/or by other means.

Summarizing and without excluding further possible embodiments, the following embodiments may be envisaged:
Embodiment 1: A system for automated tilting of at least one cuboid object around a tilting axis, comprising
   a. at least two transport cylinders arranged on opposite sides of a conveying path for movement of the cuboid object in a transportation direction over at least one portion of the conveying path, the transport cylinders being configured for engaging with the cuboid object from opposing sides; and
   b. at least one tilting edge, oriented transverse to transportation direction, the tilting edge being located in the portion of the conveying path,
   wherein the transport cylinders are configured for forcing the cuboid object over the tilting edge, thereby exerting a torque on the cuboid object and tilting the cuboid object around the tilting axis, the tilting axis being parallel to the tilting edge.
Embodiment 2: The system according to the preceding embodiment, wherein the conveying path is defined by a transport roadway on which the cuboid object is movable.
Embodiment 3: The system according to any one of the preceding embodiments, wherein the tilting edge is defined by a step transverse to the transportation direction.
Embodiment 4: The system according to the preceding embodiment, wherein the step is located in between the transport cylinders.
Embodiment 5: The system according to any one of the preceding embodiments, wherein the transportation direction is oriented essentially horizontally.
Embodiment 6: The system according to any one of the preceding embodiments, wherein the system comprises at least one transportation plane, specifically at least one horizontal transportation plane, wherein the transportation plane is oriented parallel to the transportation direction.
Embodiment 7: The system according to any one of the preceding embodiments, wherein the transport cylinders are oriented essentially vertically to at least one of the conveying path, the transportation direction and the tilting edge.
Embodiment 8: The system according to any one of the preceding embodiments, wherein the transport cylinders are powered revolving cylinders.
Embodiment 9: The system according to any one of the preceding embodiments, wherein the transport cylinders arranged on opposite sides of the conveying path rotate in opposite directions.
Embodiment 10: The system according to any one of the preceding embodiments, wherein the transport cylinders are arranged symmetrically with respect to the conveying path.
Embodiment 11: The system according to any one of the preceding embodiments, wherein the tilting edge is oriented essentially perpendicular to at least one of the conveying path, the transportation direction and an axis of rotation of the revolving transport elements.
Embodiment 12: The system according to any one of the preceding embodiments, further comprising at least one conveyor for transporting the cuboid object to the transport cylinders.
Embodiment 13: The system according to the preceding embodiment, wherein the conveyor comprises at least one of a conveyor belt and a roller conveyor.
Embodiment 14: The system according to any one of the preceding embodiments, further comprising at least one pusher for pushing the cuboid object to the transport cylinders.
Embodiment 15: The system according to any one of the preceding embodiments, wherein the transport cylinders revolve in an inwardly facing direction, such that, for each of the transport cylinders and at each time, at least one surface element of each transport cylinder facing the conveying path moves in the transportation direction.
Embodiment 16: The system according to any one of the preceding embodiments, wherein the transport cylinders have flexible surfaces.
Embodiment 17: The system according to any one of the preceding embodiments, wherein the transport cylinders at least partially are made of at least one flexible material.
Embodiment 18: The system according to any one of the preceding embodiments, wherein the transport cylinders at least partially are made of a rubber material.
Embodiment 19: The system according to any one of the preceding embodiments, wherein the system is configured for adjusting a rotation speed of the transport cylinders.
Embodiment 20: The system according to the preceding embodiment, wherein the system comprises at least one system controller configured for adjusting the rotation speed.
Embodiment 21: The system according to any one of the preceding embodiments, wherein the at least two transport cylinders arranged on opposite sides of the conveying path are spaced apart by an adjustable distance.
Embodiment 22: The system according to any one of the preceding embodiments, wherein the tilting edge has an adjustable height.
Embodiment 23: The system according to any one of the preceding embodiments, wherein a position of the tilting edge in the transportation direction is adjustable.
Embodiment 24: A packaging line for packaging goods, the packaging line comprising at least one device for inserting the goods into at least one package, the package forming at least one cuboid object, the packaging line further comprising the system according to any one of the preceding embodiments.
Embodiment 25: A method for automated tilting of at least one cuboid object around a tilting axis, comprising
   i. moving the cuboid object in a transportation direction over at least one portion of a conveying path by using at least two transport cylinders arranged on opposite sides of the conveying path, the transport cylinders engaging with the cuboid object from opposing sides; and
   ii. forcing the cuboid object over at least one tilting edge, the tilting edge being located in the portion of the conveying path, thereby exerting a torque on the cuboid object and tilting the cuboid object around the tilting axis, the tilting axis being parallel to the tilting edge.
Embodiment 26: The method according to the preceding embodiment, wherein the cuboid object, before performing step ii., is supported by a transportation plane, wherein the cuboid object has a first orientation, wherein the cuboid object in the first orientation has a maximum height H above the transportation plane, wherein the tilting edge is located above the transportation plane at a height h smaller than the height H, specifically at a height h < 1/3H, more specifically at a height 1/3 H > h > 5/100 H, and more specifically at a height h=1/10 H.
Embodiment 27: The method according to any one of the preceding embodiments referring to a method, wherein a plurality of the cuboid objects is sequentially tilted.
Embodiment 28: The method according to any one of the preceding embodiments referring to a method, wherein the cuboid object comprises at least one package for packaging goods.
Embodiment 29: The method according to any one of the preceding embodiments referring to a method, wherein the method comprises using the system according to any one of the preceding embodiments referring to a system.
Embodiment 30: A use of the system according to any one of the preceding embodiments referring to a system, for the purpose of automated tilting of packaged goods.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an exemplary embodiment of a system for automated tilting of at least one cuboid object around a tilting axis and of a packaging line, in a perspective view; and
- Figure 2: shows a schematic explanation of the tilting of a cuboid object from a first orientation into a second orientation.

### Detailed description of the embodiments

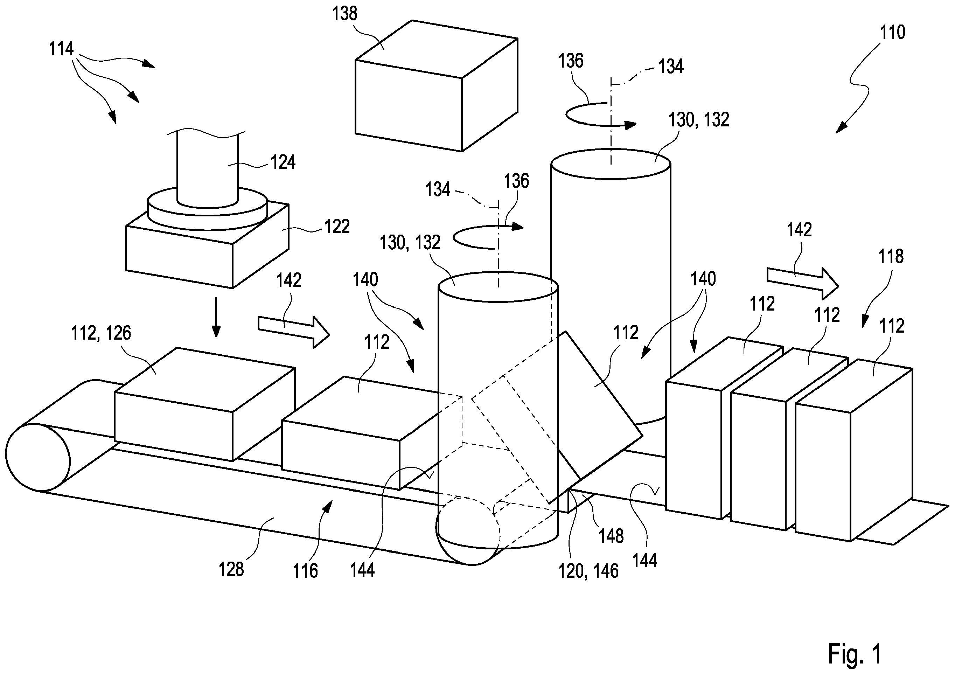

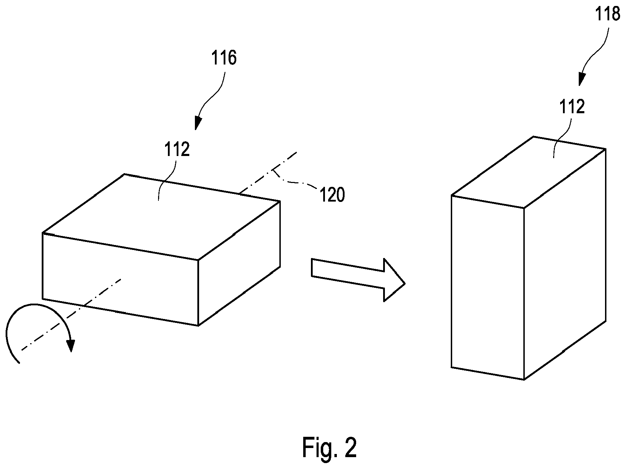

In Figure 1, an exemplary embodiment of a system 110 for automated tilting of at least one cuboid object 112 and of a packaging line 114 is shown in a perspective view. It shall be noted, however, that the system 110 may also be used as a stand-alone system 110 without being implemented into a line such as a packaging line. Thus, as an example, the system 110 may also be used in manual packaging stations or manual packaging processes. In Figure 2, a schematic view of the tilting of the cuboid object 112 from a first orientation 116 into a second orientation 118, around a tilting axis 120 is shown. Both Figures, in the following, will be explained in conjunction. The Figures also may be taken as an exemplary embodiment for a method for automated tilting of the at least one cuboid object 112.

The packaging line 114 is configured for packaging goods 122, as symbolically depicted in Figure 1. The packaging line 114 comprises, besides the at least one system 110 for automated tilting, at least one device 124 for inserting the goods 122 into at least one package 126, whereby the at least one cuboid object 112 is formed. As outlined above, are the means of feeding objects into the system 110 are also feasible, such as a manual feeding. The packaging line 114 and/or the system 110 may further comprise at least one conveyor 128, such as at least one conveyor belt, and/or at least one pusher, for conveying the cuboid objects 112 to the system 110.

The system 110 comprises, in the embodiment shown in Figure 1, at least two transport cylinders 130. In the embodiment shown, the transport cylinders 130 are embodied as revolving cylinders 132, with the cylinder axes 134 oriented in an essentially vertical fashion. The transport cylinders 130 are rotating in opposite directions, in an inwardly facing fashion, with opposite rotation directions 136. The transport cylinders 130 specifically may be powered, such as driven by a motor which is not shown, wherein the rotation may be controlled by at least one system controller 138. Specifically, the rotation of the transport cylinders 130 may be synchronized, and the rotational speed, except for the opposite direction of rotation, may be identical for the transport cylinders 130.

The transport cylinders 130 are arranged on opposite sides of a conveying path 140 of the system 110. The transport cylinders 130 are configured for engaging with the cuboid object 112 on opposing sides and for, thereby, moving the cuboid object 112 in a transportation direction 142. For improving the engagement, the transport cylinders 130 may comprise roughened surfaces and/or soft surfaces. Thus, as an example, the transport cylinders 130 may fully or partially be made of a flexible or deformable material, such as a rubber material and/or foam.

As an example, the system comprises at least one transportation plane 144 on which the cuboid object 112 rests. As will be outlined in further detail below, the transportation plane 144 may have different levels and/or different heights along the transportation direction 142. The transportation plane 144 may be a surface of the conveyor 128 and/or may fully or partially be formed by one or more sliding surfaces on which the at least one cuboid object 112 may slide.

The system 110 further comprises at least one tilting edge 146 oriented transverse to the transportation direction 142. As an example, the tilting edge 146 may be formed by a step 148 in the transportation plane 144. The tilting edge 146 specifically may be oriented essentially horizontally and essentially perpendicular to the transportation direction 142. The transport cylinders 130 are configured for forcing the cuboid object 112 over the tilting edge 146, thereby exerting a torque onto the cuboid object and tilting the cuboid object around a tilting axis 120, which may be parallel to the tilting edge 146 and/or which may coincide with the tilting edge 146. As outlined above and as explained in the context of Figure 2, by exerting the torque onto the cuboid object 112 and by thereby tilting the cuboid object 112 around the tilting axis 120, the cuboid object 112 is re-oriented from the first orientation 116 into the second orientation 118. Thus, as shown in Figure 1, before passing the transport cylinders 130 and the tilting edge 146, the at least one cuboid object 112 is oriented in the first orientation 116, and after passing the transport cylinders 130 and the tilting edge 146, the at least one cuboid object 112 is oriented in the second orientation 118. Therein, as shown, a plurality of cuboid objects 112 may be re-oriented sequentially, such as a stack of the cuboid objects 112.

The transport cylinders 130 specifically may be arranged symmetrically with respect to the conveying path 140. A distance between the transport cylinders 130, such as a distance between the cylinder axes 134, may be adjustable. Similarly, a height of the tilting edge 146 may also be adjustable.

As outlined above, the tilting process may start, as the two transport cylinders 130 move the cuboid object 112 forward until the cuboid object 112 touches the tilting edge 146, which may also function as a stopping edge. The tilting edge 146, as outlined above, specifically may be oriented perpendicular to the transportation direction 142. In this position, the cuboid object 112 is stopped temporarily. Instead, the cuboid object 112 starts revolving, due to the torque exerted thereon. During the revolving process, the cuboid object 112 is pushed upwards by the tilting edge 146, allowing the cuboid object 112 to step over this tilting edge 146. In this embodiment, as soon as the cuboid object has finished its 90° rotation, the cuboid object is on the upper level of the transportation plane 144 which specifically may be higher than before passing the tilting edge 146. This level may also be referred to as an output platform. It may be the upper level of step 148 and may be higher than the level of the conveyor 128. As soon as the cuboid object 112 has reached this position and has reached the second orientation 118, the tilting edge 146 has no stopping function any longer, the tilting process may be finished, and the cuboid object 112 may optionally be moved forward by subsequent cuboid objects 112 and/or by a transport mechanism of the system 110.

### List of reference numbers

- 110: system for automated tilting
- 112: cuboid object
- 114: packaging line
- 116: first orientation
- 118: second orientation
- 120: tilting axis
- 122: goods
- 124: device for inserting goods into package
- 126: package
- 128: conveyor
- 130: transport cylinder
- 132: revolving cylinder
- 134: cylinder axis
- 136: rotation direction
- 138: system controller
- 140: conveying path
- 142: transportation direction
- 144: transportation plane
- 146: tilting edge
- 148: step

## Claims

1. A system (110) for automated tilting of at least one cuboid object (112) around a tilting axis (120), comprising
a. at least two transport cylinders (130) arranged on opposite sides of a conveying path (140) for movement of the cuboid object (112) in a transportation direction (142) over at least one portion of the conveying path (140), the transport cylinders (130) being configured for engaging with the cuboid object (112) from opposing sides; and
b. at least one tilting edge (146) oriented transverse to transportation direction (142), the tilting edge (146) being located in the portion of the conveying path (140),
wherein the transport cylinders (130) are configured for forcing the cuboid object (112) over the tilting edge (146), thereby exerting a torque on the cuboid object (112) and tilting the cuboid object (112) around the tilting axis (120), the tilting axis (120) being parallel to the tilting edge (146).

2. The system (110) according to the preceding claim, wherein the tilting edge (146) is defined by a step (148) transverse to the transportation direction (142).

3. The system (110) according to any one of the preceding claims, wherein the transport cylinders (130) are oriented essentially vertically to at least one of the conveying path (140), the transportation direction (142) and the tilting edge (146).

4. The system (110) according to any one of the preceding claims, wherein the transport cylinders (130) are powered revolving cylinders.

5. The system (110) according to any one of the preceding claims, wherein the transport cylinders (130) are arranged symmetrically with respect to the conveying path (140).

6. The system (110) according to any one of the preceding claims, wherein the transport cylinders (130) at least partially are made of at least one flexible material.

7. The system (110) according to any one of the preceding claims, wherein the at least two transport cylinders (130) arranged on opposite sides of the conveying path (140) are spaced apart by an adjustable distance.

8. The system (110) according to any one of the preceding claims, wherein the at least one tilting edge (146) has an adjustable height.

9. The system (110) according to any one of the preceding claims, wherein a position of the tilting edge (146) in the transportation direction (142) is adjustable.

10. A packaging line (114) for packaging goods, the packaging line (114) comprising at least one device (124) for inserting the goods (122) into at least one package (126), the package (126) forming at least one cuboid object (112), the packaging line (114) further comprising the system (110) according to any one of the preceding claims.

11. A method for automated tilting of at least one cuboid object (112) around a tilting axis (120), comprising
i. moving the cuboid object (112) in a transportation direction (142) over at least one portion of a conveying path (140) by using at least two transport cylinders (130) arranged on opposite sides of the conveying path (140), the transport cylinders (130) engaging with the cuboid object (112) from opposing sides; and
ii. forcing the cuboid object (112) over at least one tilting edge (146), the tilting edge (146) being located in the portion of the conveying path (140), thereby exerting a torque on the cuboid object (112) and tilting the cuboid object (112) around the tilting axis (120), the tilting axis (120) being parallel to the tilting edge (146).

12. The method according to the preceding claim, wherein the cuboid object (112), before performing step ii., is supported by a transportation plane (144), wherein the cuboid object (112) has a first orientation (116), wherein the cuboid object (112) in the first orientation (116) has a maximum height H above the transportation plane, wherein the tilting edge (146) is located above the transportation plane (144) at a height h smaller than the height H.

13. The method according to any one of the preceding method claims, wherein a plurality of the cuboid objects (112) is sequentially tilted.

14. A use of the system (110) according to any one of the preceding claims referring to a system (110), for the purpose of automated tilting of packaged goods (122).
